Europäisches Patentamt

European Patent Office

Office européen des brevets

(11) Veröffentlichungsnummer: **0 272 385**
**A1**

(12) # EUROPÄISCHE PATENTANMELDUNG

(21) Anmeldenummer: **87113697.4**

(22) Anmeldetag: **18.09.87**

(51) Int. Cl.4: **A01D 34/74**

(30) Priorität: **23.12.86 DE 3644273**

(43) Veröffentlichungstag der Anmeldung:
**29.06.88 Patentblatt 88/26**

(84) Benannte Vertragsstaaten:
**AT BE CH FR GB LI NL**

(71) Anmelder: **Klöckner-Humboldt-Deutz
Aktiengesellschaft
Deutz-Mülheimer-Strasse 111 Postfach 80 05
09
D-5000 Köln 80(DE)**

(72) Erfinder: **von Allwörden, Wilhelm**
**Alpenstrasse 18**
**D-7704 Gailingen(DE)**
Erfinder: **Maier, Martin**
**Hilzingerstrasse 23**
**D-7702 Gottmadingen(DE)**

(54) **Kreiselmäher.**

(57) Kreiselmäher mit wenigstens einem Mähkreisel (3), der um eine im wesentlichen senkrechte Achse mittels einer Antriebswelle (12) in Drehungen versetzbar ist und der an seiner Unterseite einen mit ihm fest verbundenen über eine Lagernabe (7) an der senkrechten Antriebswelle angeordneten Schneidteller (4) aufweist, sowie einen koaxial darunter angeordneten Zwischenteller (5), der an einer zweiten Lagernabe (8) angeordnet ist und einen darunter angeordneten Gleitteller (6), der an einer dritten mittels einer Verstellvorrichtung (13) axial verschiebbaren Lagernabe (9) angeordnet ist; der Gleitteller ist elastisch verformbar, wobei sich sein Außenrand in der Nähe des Außenrandes des Zwischentellers aus steifem Material an diesem abstützt.

FIG. 1

EP 0 272 385 A1

# Kreiselmäher

Die Erfindung betrifft einen Kreiselmäher mit wenigstens einem Mähkreisel, der um eine im wesentlichen senkrechte Achse mittels einer Antriebswelle in Drehungen versetzbar ist und der an seiner Unterseite einen Schneidteller sowie einen darunter an einer Lagernabe angeordneten Stütz- bzw. Gleitteller aufweist, der mittels einer Verstellvorrichtung in bezug auf die Achse des Mähkreisels axial verschiebbar angeordnet ist.

Bei Kreiselmähern ist es oftmals erforderlich, den Abstand der am Außenumfang des Schneidtellers angeordneten Schneidmesser zum Boden zu verändern, um so eine an das Erntegut angepaßte Schnitthöhe einstellen zu können.

Aus der DE-OS 33 16 204 ist eine Vorrichtung zur Verstellung der Schnitthöhe bei einem mit Schneidmessern bestückten schleppergezogenen Kreiselmähwerk bekannt, bei welchem sich unterhalb der Messertrommel eine axial höhenverstellbare Kufe befindet, wobei am unteren Ende der Antriebswelle eine innere Nabe gelagert ist, über welche eine äußere Nabe, die mit der Kufe verschweißt ist, geschoben ist und wobei die beiden Naben seitlich abstehende Flanschteile mit fluchtenden Bohrungen aufweisen, deren un tere mit einem Innengewinde zur Aufnahme der Einstellschraube versehen ist um so die Nabe zusammen mit der Kufe vertikal verstellen zu können.

Ferner wurde auch schon vorgeschlagen (P 36 22 855) bei einem Kreiselmäher mit wenigstens einem Mähkreisel, der an seiner Unterseite einen höhenverstellbaren koaxial zum Mähkreisel angeordneten Gleitteller aufweist, diesen über ein oder mehrere Lager an der Antriebswelle zu lagern, wobei diese in axialer Richtung verstellbar am Mähkreisel gelagert ist.

Bei diesen bekannten höhenverstellbaren Kreiselmähern wird also der auf dem Boden ruhende Gleitteller bezüglich des mit den Messern bestückten Schneidtellers in seiner Höhe verstellt um so den Abstand der Schneidmesser vom Boden verändern zu können; dabei wird der zwischen dem Gleitteller und dem die Messer tragenden Schneidteller bestehende Ringspalt in seiner Höhe verändert, so daß sich insbesondere bei einer Vergrößerung der Schnitthöhe der Ringspalt derart aufweitet, daß die Gefahr besteht, daß durch Eindringen des Schnittgutes Verstopfungen auftreten, wodurch Unwuchten der Mähkreisel auftreten können bzw. die Lagerstellen einem höheren Verschleiß unterliegen. Ferner können auch die einzelnen Lagerstellen der Schneidmesser durch eindringende Steine beschädigt werden.

Aufgabe der vorliegenden Erfindung ist es, einen Kreiselmäher der eingangs näher genannten Art dahingehend auszubilden, daß keinerlei Verschmutzungen bzw. Verstopfungen zwischen Schneidteller und Gleitteller auftreten können.

Zur Lösung dieser Aufgabe wird vorgeschlagen, daß der Gleitteller elastisch verformbar ist und daß sich sein Außenrand in der Nähe des Außenrandes eines aus steifem Material bestehenden, axial unverschiebbar an der Achse des Mähkreisels angeordneten Zwischentellers an diesem abstützt. Besonders vorteilhaft ist es, wenn der Gleitteller aus faserverstärktem Kunststoff besteht, dessen auf dem Boden anliegender Bereich durch einen Stahlteller geringeren Durchmessers verstärkt ist, wobei sich der Außenrand des Gleittellers in der Nähe des Außenrands eines aus steifem Material bestehenden, axial unverschiebbar an der Achse des Mähkreisels angeordneten Zwischentellers an diesem abstützt.

Der Gleitteller kann dabei am Zwischenteller elastisch anliegen oder entlang seines gesamten Umfangs fest mit ihm verbunden sein oder aber auch entlang seines Umfangs über eine Anzahl im Abstand voneinander angeordneter Bolzen verbunden sein.

Vorteilhafterweise weist der Gleitteller eine geringere Wölbung als der Zwischenteller auf.

Bei einem bevorzugten Ausführungsbeispiel greift die axial verschiebbare Lagernabe für den Gleitteller in einer Aussparung zwischen der ersten Lagernabe für den Schneidteller und der zweiten Lagernabe für den Zwischenteller ein.

Bei einem anderen vorteilhaften Ausführungsbeispiel umgibt die axial verschiebbare Lagernabe für den Gleitteller die zweite Lagernabe für den Zwischenteller koaxial.

Die Verstellvorrichtung für die dritte Lagernabe besteht aus einer Verstellspindel, die entweder die als Hohlwelle ausgebildete Antriebswelle axial durchsetzt, wobei sie an der dritten Lagernabe befestigt ist und ihr oberes Ende über das Antriebsgehäuse für die Antriebswelle hinaus verlängert ist oder ist unterhalb der als Massivwelle ausgebildeten Antriebswelle in deren axialer Verlängerung an der dritten Lagernabe befestigt, wobei sie mit einem in der zweiten Lagernabe vorgesehenen Innengewinde zusammenwirkt.

Mit dem erfindungsgemäßen Kreiselmäher wird der Vorteil erzielt, daß der zwischen dem Schneidteller und dem Gleitteller bestehende Ringspalt, aus dem die Schneidmesser hervorragen, bei allen Schnitthöhen konstant gehalten wird, so daß kein Schmutz zwischen die beiden Teller gelangen kann und demzufolge Unwuchten der Mähkreisel bzw. Beschädigungen der Lagerrollen verhindert werden.

Im folgenden wird die Erfindung anhand der Zeichnung näher erläutert, in der vorteilhafte Ausführungsbeispiele dargestellt sind. Es zeigen:

Figur 1 einen Schnitt durch ein erstes Ausführungsbeispiel mit zwei verschiedenen Schnitthöhen;

Figur 2 einen Schnitt durch ein zweites Ausführungsbeispiel ebenfalls mit zwei verschiedenen Schnitthöhen;

Figur 3 einen Schnitt durch die in Figur 2 verwendete Verstellvorrichtung und

Figur 4 ein weiteres Ausführungsbeispiel ähnlich demjenigen von Figur 1.

In den Figuren ist mit 1 der Querträger eines Kreiselmähers bezeichnet, der mit einem oder mehreren Mähkreiseln 3 versehen ist, die über eine im wesentlichen senkrechte Antriebswelle 12, die über ein geeignetes Kegelradgetriebe 14 mit einer Kraftwelle 2 in Verbindung steht, in Drehungen versetzt werden. Am unteren Ende des Mähkreisels 3 ist ein Schneidteller 4 angeordnet, der an einer Lagernabe 7 gelagert ist, welche z.B. über ein Nagellager 11 und ein Kugellager 10 an der Tragkonstruktion für den Mähkreisel gelagert ist.

Die erste Lagernabe 7 wird von einer zweiten konzentrisch und koaxial dazu angeordneten Lagernabe 8 umgeben, an der ein Zwischenteller 5 angeordnet ist. Der Außenrand des Zwischentellers 5 verläuft im wesentlichen parallel zum Außenrand des Schneidtellers 4, so daß ein Ringspalt entsteht, in dem eine Anzahl nicht dargestellter Schneidmesser angeordnet ist.

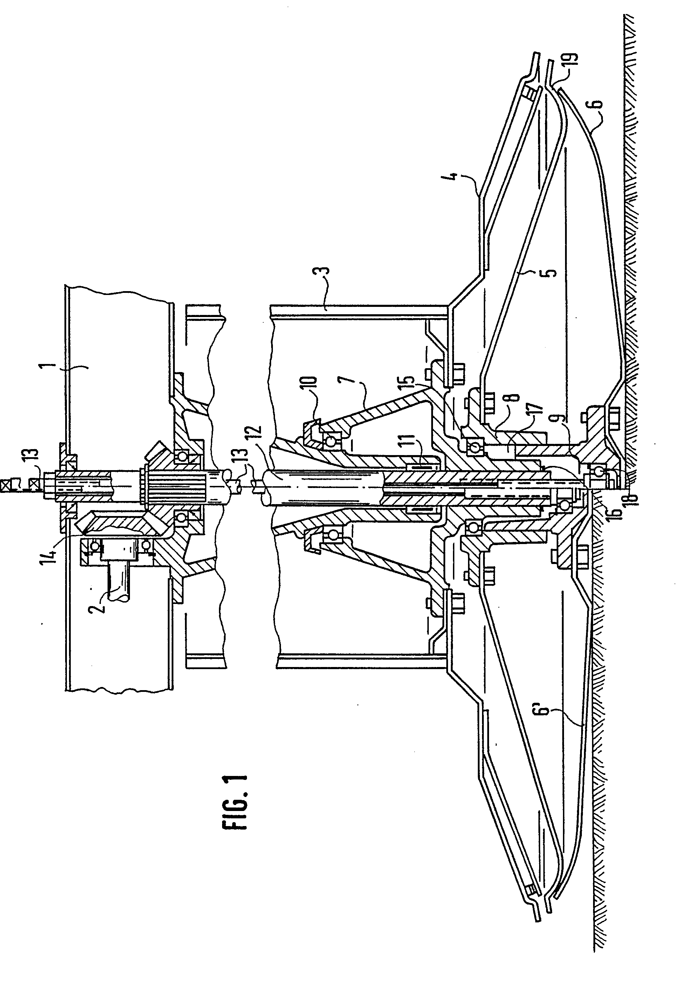

Unterhalb des Zwischentellers 5 ist ein Gleitteller 6 angeordnet, der an einer dritten Lagernabe 9 angeordnet ist, z.B. durch eine geeignete Schraubverbindung. Die Lagernabe 9 ist axial verschiebbar und greift bei dem in Figur 1 dargestellten Ausführungsbeispiel in eine geeignete Aussparung zwischen der ersten Lagernabe 7 und der zweiten Lagernabe 8 ein, wobei die rechte Hälfte von Figur 1 zeigt, die Schnitthöhe, d.h. der Anstand zwischen Ringspalt und Boden größer ist als bei der linken Hälfte von Figur 1, bei der der obere Rand der dritten Lagernabe 9 an einem Lager 15 zwischen erster und zweiter Lagernabe anliegt.

Der Zwischenteller 5 besteht aus einem möglichst steifen Material und weist eine größere Wölbung auf als der Gleitteller 6, der aus einem flexiblen Material besteht mit einegeringeren Wölbung als der Zwischenteller 5. Der äußere Rand des Gleittellers 6 liegt bei 19 in der Nähe des äußeren Randes am Zwischenteller 5 an und zwar bei jeder einstellbaren Schnitthöhe, wobei der Außenrand des Gleittellers 6 gemäß Figur 1 elastisch am Zwischenteller anliegt. Mit 18 ist ein Kugellager bezeichnet, auf dem sich die Lagernabe 9 abstützt.

Bei diesem Ausführungsbeispiel erfolgt die axiale Verschiebung der Lagernabe 9, d.h. die Schnitthöhenverstellung durch eine Verstellspindel 13, welche die als Hohlwelle ausgebildete Antriebswelle 12 axial durchsetzt. An ihrem unteren Ende ist die Verstellspindel 13 mit der Lagernabe 9 verbunden, während ihr oberes Ende aus dem Gehäuse des Tragbalkens herausragt; sie kann an diesem Ende mit einem Außengewinde versehen sein, das mit einer entsprechenden Kontermutter zusammenwirkt, so daß ein einfaches Lösen und Festlegen der Verstellspindel 13 von oben her möglich ist. Der flexible Schneidteller 6' läßt sich wie in Figur 1 links dargestellt, in Richtung einer geringen Schnitthöhe nach oben zusammenziehen oder wie es in Figur 1 rechts dargestellt ist, zur Einstellung einer größeren Schnitthöhe nach unten herausdrücken, wobei in allen Stellungen gewährleistet ist, daß sein Außenrand bei 19 in der Nähe des Außenrandes des Zwischentellers 5 anliegt

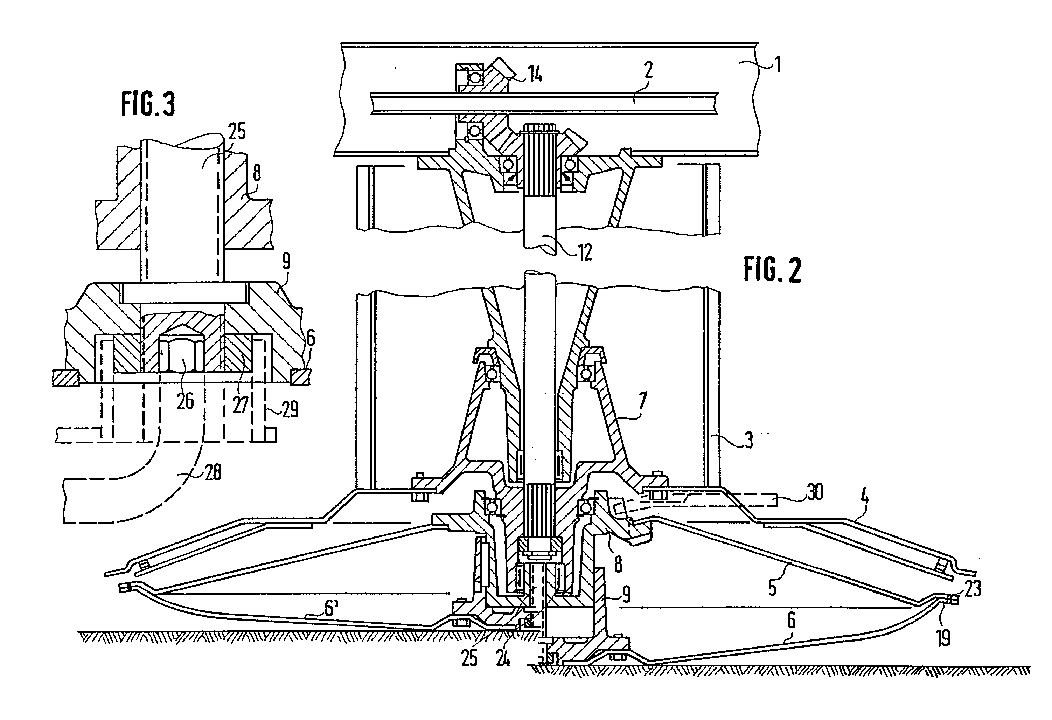

Bei dem in Figur 2 dargestellten Ausführungsbeispiel, bei dem gleiche Teile mit gleichen Bezugzeichen versehen sind, ist der gesamte Außenumfang des Gleittellers 6 bei 19 mit dem Außenumfang des Zwischentellers 5 fest verbunden, z.B. mittels einer Schweißverbindung 23. Die Schnitthöhenverstellung bei diesem Ausführungsbeispiel erfolgt durch eine Verstellspindel 25, die unterhalb der als Massivwelle ausgeführten Antriebswelle 12 und in deren axialer Verlängerung angeordnet ist. Die Verstellspindel 25 ist dabei an der dritten Lagernabe 9 befestigt und greift z.B. in ein in der zweiten Lagernabe 8 axial vorgesehenes Innengewinde ein, so daß sie zu einer Verringerung der Schnitthöhe (Figur 2 links) in die zweite Lagernabe 8 einschraubbar ist.

Ferner umgibt bei diesem Ausführungsbeispiel die dritte Lagernabe 9 die zweite Lagernabe 8 koaxial von außen und liegt gleitend an ihr an, wobei zwischen der zweiten Lagernabe 8 und der ersten Lagernabe 7 ein Nadellager 24 angeordnet ist.

Figur 3 zeigt eine vergrößerte Darstellung des unteren Endes der Verstellspindel 25, die axial in die Lagernabe 8 mit Innengewinde eingreift. Am unteren Ende der Verstellspindel 25 kann ein Innensechskant 26 vorgesehen sein, der mittels eines Sechskantstiftschlüssels 28 betätigbar ist, der eine geeignete Bohrung im Gleitteller 6 durchsetzt. Ferner ist am unteren Ende der Verstellspindel 25 eine Kontermutter 27 vorgesehen, die von einem Ringschlüssel 29 verdrehbar ist.

Bei diesem Ausführungsbeispiel ist ferner eine Keilnutverbindung zwischen den Lagernaben 7 und 8 vorgesehen, um diese gegen gegenseitiges Verdrehen zu sichern. In der linken Hälfte von Figur 1 ist ein Gleitteller 6' dargestellt, der in der höchsten Stellung seine Normalform aufweist und für die niedrigste Mähstellung zusammendrückbar ist. In der rechten Hälfte von Figur 1 ist ein Gleitteller 6 dargestellt, der in der niedrigsten Mähstellung seine Normalform ab und für die höchste Mähstellung auseinanderziehbar ist. In diesem Fall kann eine Nockenverriegelung 30 für den Schneidteller 4 vorgesehen sein, die in die erste Lagernabe 7 eingreift.

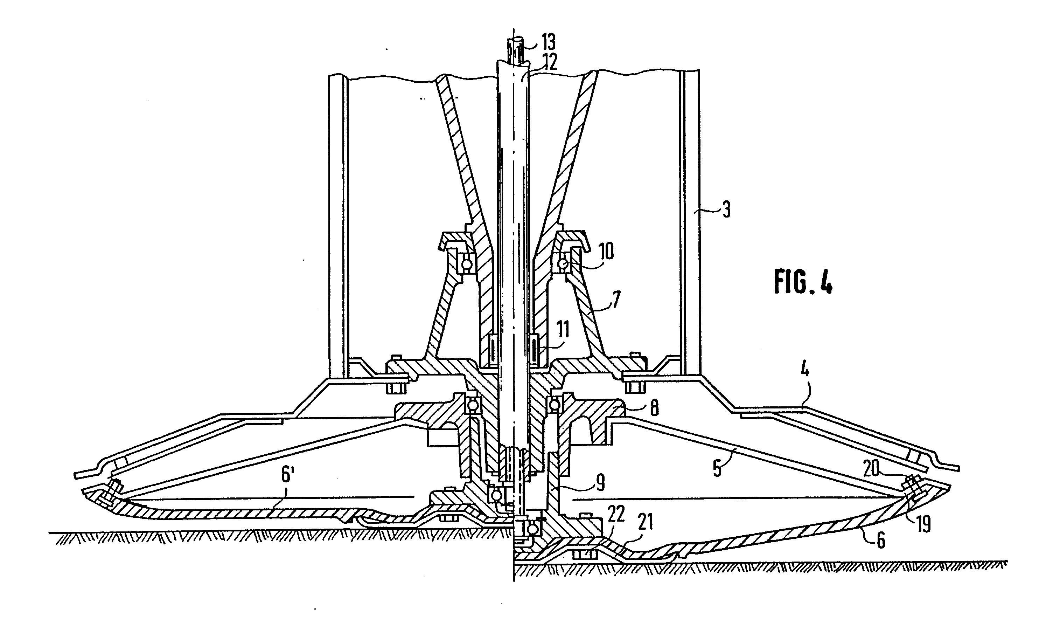

Bei dem in Figur 4 dargestellten Ausführungsbeispiel ist wieder mit 3 der Mähkreisel bezeichnet, an dem der Schneidteller 4 angeordnet ist. Der Zwischenteller 5 ist an einer Lagernabe 8 befestigt und der Gleitteller 6 an einer Lagernabe 9, die in einer Aussparung zwischen den Lagernaben 7 und 8 verschiebbar gelagert ist. Der Gleitteller 6 besteht bei diesem Ausführungsbeispiel aus einem faserverstärkten Kunststoff, wobei die Befestigung des äußeren Randes des Gleittellers 6 bei 19 am Zwischenteller 5 mittels einer Vielzahl von Schrauben 20 erfolgt, die im Abstand voneinander z.B. in einem im Rand des Gleittellers 6 eingegossenen Stahlring vorgesehen sind.

Im Bereich der Aufstandsfläche ist unterhalb des aus Kunst stoff bestehenden Gleittellers 6 ein zusätzlicher Verschleißteller 21 aus Stahl angeordnet, z.B. über eine geeignete Bolzenverbindung 22.

Auch bei diesem Ausführungsbeispiel erfolgt die axiale Verstellung des flexiblen Gleittellers 6 durch eine die Antriebswelle 12 axial durchsetzende Verstellspindel 13 von oben.

## Ansprüche

1. Kreiselmäher mit wenigstens einem Mähkreisel, der um eine im wesentlichen senkrechte Achse mittels einer Antriebswelle in Drehungen versetzbar ist und der an seiner Unterseite einen Schneidteller sowie einen darunter an einer Lagernabe angeordneten Stütz-bzw. Gleitteller aufweist, der mittels einer Verstellvorrichtung in bezug auf die Achse des Mähkreisels axial verschiebbar angeordnet ist, dadurch gekennzeichnet, daß der Gleitteller (6) elastisch verformbar ist und daß sich sein Außenrand in der Nähe des Außenrandes eines aus steifem Material bestehenden, axial unverschiebbar an der Achse des Mähkreisels angeordneten Zwischentellers (5) an diesem abstützt.

2. Kreiselmäher mit wenigstens einem Mähkreisel, der um eine im wesentlichen senkrechte Achse mittels einer Antriebswelle in Drehungen versetzbar ist und der an seiner Unterseite einen Schneidteller sowie einen darunter an einer Lagernabe angeordneten Stütz-bzw. Gleitteller aufweist, der mittels einer Verstellvorrichtung in bezug auf die Achse des Mähkreisels axial verschiebbar angeordnet ist, insbesondere nach Patentanspruch 1, dadurch gekennzeichnet, daß der Gleitteller (6) aus faserverstärktem Kunststoff besteht, dessen auf dem Boden anliegender Bereich durch einen Stahlteller (21) geringeren Durchmessers verstärkt ist, und daß sich der Außenrand des Gleittellers in der Nähe des Außenrandes eines aus steifem Material bestehenden, axial unverschiebbar an der Achse des Mähkreisels angeordneten Zwischentellers 5 an diesem abstützt.

3. Kreiselmäher nach Anspruch 1 oder 2, dadurch gekennzeichnet, daß der Gleitteller (6) am Zwischenteller (5) elastisch anliegt.

4. Kreiselmäher nach Anspruch 1 oder 2, dadurch gekennzeichnet, daß der Gleitteller mit dem Zwischenteller entlang seines gesamten Umfanges fest verbunden ist.

5. Kreiselmäher nach Anspruch 1 oder 2, dadurch gekennzeichnet, daß der Gleitteller mit dem Zwischenteller entlang seines Umfangs über eine Anzahl im Abstand voneinander angeordnete Bolzen verbunden ist.

6. Kreiselmäher nach einem der vorhergehenden Ansprüche, dadurch gekennzeichnet, daß der Gleitteller eine geringere Wölbung als der Zwischenteller aufweist.

7. Kreiselmäher nach einem der vorhergehenden Ansprüche, dadurch gekennzeichnet, daß die axial verschiebbare Lagernabe (9) für den Gleitteller in eine Aussparung zwischen der ersten Lagernabe (7) für den Schneidteller und der zweiten Lagernabe (8) für den Zwischenteller eingreift.

8. Kreiselmäher nach einem der vorhergehenden Ansprüche, dadurch gekennzeichnet, daß die axial verschiebbare Lagernabe (9) für den Gleitteller die zweite Lagernabe (8) für den Zwischenteller koaxial umgibt.

9. Kreiselmäher nach einem der verhergehenden Ansprüche, dadurch gekennzeichnet, daß die Verstellvorrichtung für die dritte Lagernabe (9) aus einer Verstellspindel (13) besteht, die die als Hohlwelle ausgebildete Antriebswelle (12) axial durchsetzt und an der dritten Lagernabe befestigt ist, wobei ihr oberes Ende über das Antriebsgehäuse für die Antriebswelle hinaus verlängert ist.

10. Kreiselmäher nach einem der vorhergehenden Ansprüche, dadurch gekennzeichnet, daß die Verstellvorrichtung für die dritte Lagernabe (9) aus einer Verstellspindel (25) besteht, die unterhalb der als Massivwelle ausgebildeten Antriebswelle in deren axialer Verlängerung an der dritten Lagernabe (9) befestigt ist und mit einem in der zweiten Lagernabe (8) vorgesehenen Innengewinde zusammenwirkt.

FIG. 1

0 272 385

FIG.3

FIG.2

0 272 385

8711369 7. 4

FIG. 4

0 272 385

8711 3 6 9 7 . 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 380 715 (KLOCKNER-HUMBOLD-DEUTZ) * Insgesamt * --- | 1-3 | A 01 D 34/74 |
| D,A | DE-A-3 316 204 (FELLA-WERKE) * Seite 7, Abschnitt 2; Figur 5 * --- | 1,8 | |
| A | FR-A-2 317 868 (FAHR) * Insgesamt * --- | 9 | |
| A | GB-A-2 159 684 (CLAAS) --- | | |
| A | DE-A-3 113 726 (BRAUN) --- | | |
| A | DE-A-3 411 354 (NIEMEYER) --- | | |
| A | DE-A-1 915 472 (NIEMEYER) --- | | |
| A | FR-A-2 378 437 (NIEMEYER) --- | | |
| A | GB-A-2 000 954 (A. WATSON) --- | | **RECHERCHIERTE SACHGEBIETE (Int. Cl.4)** |
| A | GB-A-1 211 862 (ORCHARD EQUIPMENT LTD) --- | | A 01 D |
| A | NL-A-8 002 780 (VOGELENZANG) --- | | |
| A | NL-A-7 805 129 (LIET) ----- | | |

Der vorliegende Recherchenbericht wurde für alle Patentansprüche erstellt

| Recherchenort | Abschlußdatum der Recherche | Prüfer |
|---|---|---|
| DEN HAAG | 26-02-1988 | DE LAMEILLIEURE D. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.............................................................
& : Mitglied der gleichen Patentfamilie, übereinstimmendes Dokument